# EUROPEAN PATENT APPLICATION

(11) **EP 1 770 367 A1**
(43) Date of publication of application: **04.04.2007**
(21) Application number: 05021326.3
(22) Date of filing: 29.09.2005
(51) Int. Cl.: G01C 22/00

(54) **Flash memory disk with detection functionality**

(71) Applicant: Ritek Corporation, Taiwan 30316 (TW)
(72) Inventor: Lin, Yu-Chuan, Wen Shan Li, Hsinpu Town, Hsinchu Hsien (TW); Chen, Chun-Chieh, N. Dist., Tainan (TW); Chen, Chang-Yi, Yuanli Town, Miaoli Hsien (TW)
(74) Representative: Viering, Jentschura & Partner

(57) **Abstract**

A detection functionality of any type sensor is integrated into a flash memory disk. The sensor detects its environment and generates signals constantly. A microcontroller, connected with the sensor, saves all signals into a flash memory. A connection port, connected with the microcontroller, enables the flash memory disk to transfer its data to and from a computer when the connection port is coupled with the computer. A battery supplies power to the flash memory, the sensor and the microcontroller.

## Description

### BACKGROUND

### Field of Invention

The present invention relates to a flash memory disk. More particularly, the present invention relates to a flash memory disk with detection functionality.

### Description of Related Art

Detecting or measuring a personal environment by means of different kinds of sensors is an extensive application. For instance, equipment is used to measure a patient's pulse or heartbeat while he stays in a hospital. However, measuring one's pulse or heartbeat in a ward for a long period of time, i.e. a week, is considered impractical for a healthy person.

There are people who like to know the average number of steps they walk every day, from the moment they rise out of bed to the moment they return to bed. Moreover, they may desire data from several days so as to precisely measure an average step count and consumed calories.

For the foregoing reasons, there is a need for a personal device with long-term measuring and storage abilities.

### SUMMARY

It is therefore an objective of the present invention to provide a flash memory disk with detection functionality.

In accordance with the foregoing objective of the present invention, a detection functionality of any type sensor is integrated into a flash memory disk. The sensor detects its environment and generates signals constantly. A microcontroller, connected with the sensor, saves all signals into a flash memory. A connection port, connected with the microcontroller, enables the flash memory disk to transfer its data to and from a computer when the connection port is coupled with the computer. A battery supplies power to the flash memory, the sensor and the microcontroller.

Thus, a flash memory disk equipped with detection functionality can resolve problems regarding long-term measuring and storage. The flash memory disk can be carried in one's pocket to detect or measure its environment for a long period of time.

It is to be understood that both the foregoing general description and the following detailed description are by examples and are intended to provide further explanation of the invention as claimed.

### BRIEF DESCRIPTION OF THE DRAWINGS

The accompanying drawings are included to provide a further understanding of the invention and are incorporated in and constitute a part of this specification. The drawings illustrate embodiments of the invention and, together with the description, serve to explain the principles of the invention. In the drawings,
Fig. 1 is a block diagram of a flash memory disk with detection functionality according to one preferred embodiment of this invention; and
Fig. 2 is a block diagram of flash memory disk with step-count functionality according to one preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In order to satisfy the need of a personal device with long-term measuring and storage abilities, a sensor of a certain function is integrated into a flash memory disk. The flash memory disk can expand its use by adding detection functionality. Thus, the flash memory disk becomes a personal device with long-term measuring and storage ability, rather than merely a storage device.

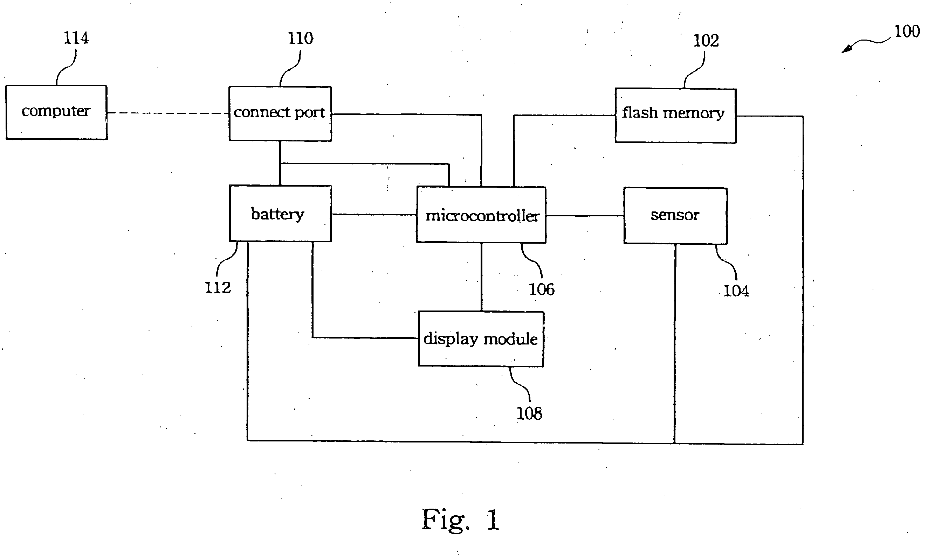

Fig. 1 is a block diagram of a flash memory disk with detection functionality according to one preferred embodiment of this invention. Connections among all components of the flash memory disk 100 are presented by lines linked between blocks. The flash memory 102 provides storage space and a function for storing data. A sensor 104 measures or detects certain physical changes in its environment and generates a signal to a microcontroller 106 for a next processing step. The sensor 104 measures or detects its environment under the control of the microcontroller 106, and measured or detected data is stored in the flash memory 102 or output by a display module 108. Data in the flash memory 102 can also be accessed or be output by the display module 108 under the control of microcontroller 106. Moreover, data can be transferred from the flash memory 102 to a computer 114 or be transferred from the computer 114 to the flash memory 102 under the control of microcontroller 106 when a connection port 110 is coupled with the computer 114. A battery 112 provides power to all components, which need it, such as the flash memory 102, the microcontroller 106, the sensor 104 and the display module 108.

The display module 108 can be an LCD apparatus or an LED display apparatus. A connection between the computer 114 and the flash memory disk 100 (presented by the dashed-line in Fig. 1) can be achieved by the following ways: (1) USB (Universal Serial Bus) interface, (2) RS 232 Serial Port, (3) Printer Serial Port, (4) wireless protocol interface (such as Bluetooth, 802.11, IR and RF interfaces), and (5) IEEE 1394 interface.

The sensor 104, which can be applied in the flash memory disk 100, is any of the following:
1. Temperature: platinum resistance thermometer.
2. Humidity: polymer moisture sensor.
3. Vibration: reed switch, accelerometer, piezoelectric sensor.
4. Gravity: gravity sensor.
5. Position: draw-wire displacement sensor, laser displacement sensor, eddy-current displacement sensor, angle sensor, GPS (Global Positioning System) receiver.

Above-mentioned sensors can be applied in the following fields:
1. Temperature: measuring body temperature, ambient temperature, or temperature of a specific object.
2. Humidity: measuring ambient humidity.
3. Vibration: measuring strength of an earthquake or times of repeated movements.
4. Gravity: detecting varied height or environmental changes (such as the altitude of an airplane).
6. Position: detecting absolute coordinate or relative coordinate.

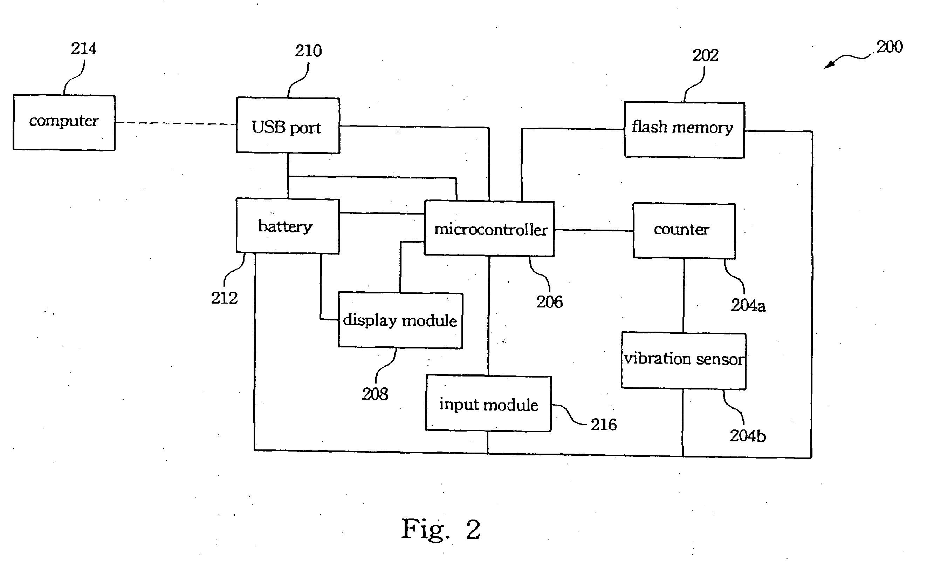

Fig. 2 is a block diagram of flash memory disk with step-count functionality according to one preferred embodiment of this invention. This preferred embodiment is a flash memory disk equipped with a step-count function. According to personal characteristics (such as weight) and steps walked in one day, consumed calories in one day can be obtained. Components in Fig. 2 named the same as those in Fig. 1 have the same function. Connections among all components of the flash memory disk 200 are presented by lines linked between blocks. A vibration sensor 204b, such as a reed switch, an accelerometer or a piezoelectric sensor, is integrated into the flash memory disk 200 to detect vibrations of walking. A counter 204a accumulates what the vibration sensor 204b detects. Personal characteristics information, such as weight and height, is input by an input module 216. Other system information, such as date, time or alarm can also be input by the input module 216.

The flash memory disk can record start time, how many steps, and end time, and all information is stored in the flash memory 202. The display module 208 can output information, such as accumulated walking steps or consumed calories.

The connection between the computer 214 and the flash memory disk 200 (presented by the dashed-line in Fig. 2) is achieved by a USB port 210. A user can access the flash memory disk 200 via the computer 214 and process data as he wants when the USB port 210 is coupled with the computer 214. A battery 212 provides power to all components, which need it, such as the flash memory 202, the microcontroller 206, the vibration sensor 204b, the counter 204a, the display module 208 and the input module 216.

According to the preferred embodiments of the present invention, a flash memory disk equipped with detection functionality can resolve problems regarding long-term measuring and storage. The flash memory disk can be carried in one's pocket to detect its environment for a long period of time.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following ciaims and their equivalents.

## Claims

1. A flash memory disk, having detection functionality, said flash memory disk comprising:
a flash memory;
a sensor, detecting its environment and generating a signal;
a microcontroller, coupled with said sensor, the signal being stored in said flash memory under control of said microcontroller;
a connection port, coupled with said microcontroller, said flash memory transferring data to and from a computer when said connection port is coupled with the computer; and
a battery, supplying power to said flash memory, said sensor and said microcontroller.

2. The flash memory disk of claim 1, further comprising a display module coupled with said microcontroller, said display module outputting what said sensor detects under control of said microcontroller.

3. The flash memory disk of claim 1, wherein said connection port is an IEEE 1394 port, an RS-232 serial port, a printer port or a USB port.

4. The flash memory disk of claim 1, wherein said connection port is a wireless protocol port.

5. The flash memory disk of claim 1, wherein said sensor is a platinum resistance thermometer.

6. The flash memory disk of claim 1, wherein said sensor is a polymer moisture sensor.

7. The flash memory disk of claim 1, wherein said sensor is a reed switch, an accelerometer, or a piezoelectric sensor.

8. The flash memory disk of claim 1, wherein said sensor is a gravity meter.

9. The flash memory disk of claim 1, wherein said sensor is a draw-wire displacement sensor, a laser displacement sensor, an eddy-current displacement sensor, an angle sensor, or a GPS receiver.

10. A flash memory disk, having step-count functionality, said flash memory disk comprising:
a flash memory;
a vibration sensor, detecting repeated movements of a person's walk and generating a signal;
a counter, coupled with said vibration sensor, receiving and accumulating the signal to calculate steps;
a microcontroller, coupled with said counter, said signal being stored in said flash memory under control of said microcontroller;
a USB port, coupled with said microcontroller, said flash memory transferring data to and from a computer when said USB port is coupled with the computer; and
a battery, supplying power to said flash memory, said sensor, said counter and said microcontroller.

11. The flash memory disk of claim 10, wherein said vibration sensor is a reed switch, an accelerometer, or a piezoelectric sensor.

12. The flash memory disk of claim 10, further comprising an input module, coupled with said microcontroller, wherein personal data is input into said microcontroller by means of said input module.

13. The flash memory disk of claim 10, further comprising a display module coupled with said microcontroller, said display module outputting what said sensor detects under control of said microcontroller.
